# EUROPÄISCHE PATENTSCHRIFT

(11) **EP 2 363 323 B1**
(45) Veröffentlichungstag und Bekanntmachung des Hinweises auf die Patenterteilung: **07.08.2013**
(21) Anmeldenummer: 11400015.1
(22) Anmeldetag: 26.02.2011
(51) Int. Cl.: B60R 9/06, B60R 9/10

(54) **Lastenträger mit einem Funktionsträger**
Load carrier with a functional support
Support de charges avec un support fonctionnel

(30) Priorität: 03.03.2010 DE 102010010243
(43) Veröffentlichungstag der Anmeldung: 07.09.2011
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Peitz, Jürgen, 33378 Rheda-Wiedenbrück (DE)
(74) Vertreter: Bregenzer, Michael

(56) Entgegenhaltungen:
- EP-A1- 1 095 820
- EP-A2- 1 876 060
- EP-A2- 1 995 119
- EP-A2- 2 017 131
- WO-A2-2008/054719
- DE-U1-202005 015 242
- US-A- 6 164 804

## Beschreibung

Die Erfindung betrifft einen Lastenträger für ein Kraftfahrzeug, insbesondere einen Personenkraftwagen, mit einem insbesondere ein Tragegestell aufweisenden Tragbasis zum Tragen von Lasten, wobei der Lastenträger einen Funktionsträger umfasst, an dem ein Erweiterungsbauteil zwischen einer Nutzstellung, in der das Erweiterungsbauteil in einen Außenraum vor der Tragbasis vor verstellt ist, und einer Staustellung, in der das Erweiterungsbauteil in einen Ruheraum zu der Tragbasis hin verstellt ist, mittels einer Gelenkanordnung beweglich gelagert ist.

Ein solcher Lastenträger geht aus gattungsgemäβer EP 1 995 119 A2 hervor.

Ein Lastenträger, der in der Art einer Schublade aus dem Heck eines Kraftfahrzeuges ausfahrbar ist, ist z.B. in DE 10 2009 057 668 beschrieben. Ferner sind an Anhängekupplungen lösbar befestigbare Lastenträger bekannt, z.B. aus DE 10 2008 012 689.

Bei den bekannten Lastenträgern ist heckseitig als ein Funktionsträger ein Kunststoffbauteil vorgesehen, an dem seitlich abschwenkbare oder wegschwenkbare Leuchten schwenkbeweglich gelagert sind. Mithin können also diese Erweiterungsbauteile aus einer Nutzstellung, in der sie etwa in Fahrzeugquerrichtung verlaufen, etwa also etwa mit einem Kennzeichen fluchten, das ebenfalls am Funktionsträger befestigt ist, in eine Staustellung oder Ruhestellung gebracht werden, bei der diese Erweiterungsbauteile in Richtung des Grundgestells bzw. der Tragbasis geschwenkt sind. Bei dem schlittenartig ausziehbaren Lastenträger ist der Kennzeichenträger unmittelbar am Funktionsträger vorgesehen.

In der Ruhestellung bzw. Nichtgebrauchsstellung soll der Lastenträger möglichst kompakt sein, so dass er leicht transportierbar ist oder - im Falle der schlittenartigen Bauweise - in eine Aufnahme am Kraftfahrzeug eingeschoben werden kann. Dem steht allerdings entgegen, dass das Erweiterungsbauteil oder die Erweiterungsbauteile in der Nutzstellung häufig weit ab von der eigentlichen Tragbasis stehen sollen. Im Zusammenhang mit einem elektrischen Erweiterungsbauteil, beispielsweise einer Leuchte oder einem beleuchteten Kennzeichenträger, stellt sich das Problem, dass eine Kabelführung möglichst einfach und verschleißarm sein sollte. Durch häufiges Bewegen oder Abknicken eines Kabels kann dieses nämlich vorzeitig verschleißen, so dass die Betriebssicherheit des Lastenträgers und mithin auch des gesamten Kraftfahrzeuges nicht gegeben sein könnte.

Es ist daher die Aufgabe der vorliegenden Erfindung, einen Lastenträger mit einem optimal beweglich gelagerten Erweiterungsbauteil bereitzustellen.

Zur Lösung der Aufgabe ist ein Lastenträger gemäß der technischen Lehre des Anspruchs 1 vorgesehen.

Ein Grundgedanke der Erfindung ist es, dass die Gelenkanordnung die Beweglichkeit des Erweiterungsbauteiles bezüglich der Tragbasis, beispielsweise eines Schlittens eines Tragegestells oder dergleichen, deutlich erhöht. Somit kann also das Erweiterungsbauteil, insbesondere ein Kennzeichenträger, eine Leuchte oder ein sonstiges zu bewegendes Bauteil nicht nur beispielsweise um eine Schwenkachse schwenken, sondern um mehrere Schwenkachsen oder auch um eine nicht ortsfeste Schwenkachse. Zudem ist eine Schiebeführung ebenfalls möglich. Mithin umfasst also der Begriff "Gelenk" im Sinne des vorstehenden und nachstehenden auch ein Schiebegelenk oder ein Schwenk-/Schiebegelenk.

Ein weiterer, eine an sich unabhängige Erfindung darstellender Aspekt umfasst, dass die Gelenkanordnung mindestens ein Schwenklager umfasst, bei dem ein erstes und ein zweites Lagerelement um eine Schwenkachse schwenkbar aneinander gelagert sind und um eine entlang der Schwenkachse verlaufende Lagerkavität zur Aufnahme einer elektrischen Leitung zur elektrischen Versorgung des Erweiterungsbauteiles schwenken. Somit ist es möglich, dass innerhalb der Lagerkavität die elektrische Leitung - es könnte auch eine optische und/oder opto-elektrische Leitung vorgesehen sein - beim Schwenken des Schwenklagers relativ ortsfest innerhalb der Lagerkavität verbleibt und allenfalls in einem gewissen Umfang verdrillt wird.

Dabei kann vorteilhaft vorgesehen sein, dass die Lagerkavität verhältnismäßig lang ist, so dass die Lagerkavität entlang der Schwenkachse eine große Länge aufweist, die elektrische Leitung entsprechend lang sein kann, so dass sie bezogen auf ihre Gesamtlänge nur eine geringe Verdrillung oder Verdrehung um die Schwenkachse erfährt. Zum andern wirkt sich dies positiv auf die Belastbarkeit des Schwenklagers aus, da die mechanischen Bauteile über einen relativ langen Lagerweg miteinander verknüpft und gekoppelt sind, so dass die Belastung für die einzelnen Bauteile wesentlich geringer ist.

Eine erste Ausgestaltung dieser Lagerkavität bzw. des Schwenklagers mit integrierter elektrischer Leiter kann vorsehen, dass beispielsweise eine Lagerachse oder ein Lagerachsstück eine entsprechend lange Bohrung und Durchgangsöffnung aufweist, in der die elektrische Leitung geführt sein kann.

Ein anderer Aspekt sieht vor, dass die Lagerkavität von mindestens einem Schwenkvorsprung des ersten Lagerelements und/oder des zweiten Lagerelements begrenzt ist. Dies kann eine indirekte Begrenzung dergestalt, dass die elektrische Leitung in einer Art Hülse geführt ist. Bevorzugt ist jedoch eine unmittelbare Begrenzung der Gestalt, dass der Schwenkvorsprung oder mehrere Schwenkvorsprünge beispielsweise eine innenseitige (bezogen auf die Schwenkachse) Ausnehmung aufweisen, die die Lagerkavität definiert. Bevorzugt ist dabei eine Anordnung von Schwenkvorsprüngen, die in der Art eines Klavierbandes ineinandergreifen.

Die Gelenkanordnung umfasst zweckmäßigerweise mindestens einen Tragarm zum Tragen des Erweiterungsbauteils.

Der Tragarm kann als eine Art Auslegerarm ausgestaltet sein, der in der Nutzstellung ein Bauteil übergreift, beispielsweise ein Stoßfängerelement derart, dass das Erweiterungsbauteil im Außenraum vor dem Bauteil angeordnet ist. Mit dem Tragarm kann eine galgenartige Konfiguration geschaffen werden, so dass das Erweiterungsbauteil in der Art eines Galgens vor dem zu übergreifenden Bauteil quasi hängt.

Bevorzugt ist, wenn das Erweiterungsbauteil frei vor dem Bauteil steht, das übergriffen wird. Dadurch wird beispielsweise eine Beschädigung eines Heckstoßfängerteiles vermieden, das beispielsweise einen Bestandteil des Lastenträgers bildet oder auch an sonstiger Stelle an dem Kraftfahrzeug befestigt ist.

Es ist vorteilhaft im Sinne einer kompakten Bauart des Lastenträgers in seiner Ruhestellung oder Nichtgebrauchsstellung, wenn der mindestens eine Tragarm in der Staustellung zumindest im Wesentlichen in dem Ruheraum angeordnet ist. Weiterhin ist es zweckmäßig, wenn der mindestens eine Tragarm und das Erweiterungsbauteil in der Staustellung etwa parallel verlaufen oder gar aneinander anliegen. In allen vorgenannten Fällen, die auch in Kombination miteinander getroffen sein können, baut die Gelenkanordnung in der Ruhestellung oder Staustellung sehr kompakt.

Die Gelenkanordnung umfasst zweckmäßigerweise einen Lenkarm, der die Bewegung des Tragarms zwischen der Staustellung und der Nutzstellung führt und/oder mindestens eine Endlage der Bewegung definiert. Es versteht sich, dass auch mehrere Lenkarme möglich sind. Selbstverständlich könnten auch mehrere Tragarme vorgesehen sein, wobei diese Tragarme selbstverständlich parallel im Sinne eines gegenseitigen Verstärkens oder gegenseitigen Führens vorgesehen sein könnten, oder auch miteinander längsgekoppelt derart, dass beispielsweise ein Auslegerweg vergrößert wird.

Bevorzugt sind der Tragarm und der Lenkarm mittels einer Schwenkführung und/oder eine Schiebeführung miteinander gekoppelt.

Der Lenkarm und der mindestens eine Tragarm sind zweckmäßigerweise mittels Schwenklagern an einem Basiskörper des Funktionsträgers schwenkbar gelagert. Der Lenkarm und der Tragarm können auch Bestandteile eines Viergelenks sein. Eine bevorzugte, in der Zeichnung dargestellte Ausführungsform der Erfindung sieht vor, dass der Lenkarm und der Tragarm schwenkbar am Basiskörper schwenkend gelagert sind, relativ zueinander jedoch mittels einer Schwenk-/Schiebeführung aneinander gelagert sind.

Zwar könnte es der Fall sein, dass der Tragarm in der Nutzstellung oder der Staustellung auf einem Bauteil des Lastenträgers oder Kraftfahrzeuges aufliegt, so dass er insofern gestützt ist. Beispielsweise ist denkbar, dass ein Kennzeichenträger oder eine Leuchte des Lastenträgers unmittelbar vom Heck des Kraftfahrzeuges, insbesondere dessen Stossfänger, abgestützt ist. Selbstverständlich wird man hier zweckmäßigerweise Pufferelemente, beispielsweise Gummipuffer oder dergleichen, vorsehen, um eine Beschädigung des Kraftfahrzeuges zu vermeiden.

Bevorzugt ist jedoch, wenn der Lenkarm den mindestens einen Tragarm in der Nutzstellung und/oder der Staustellung stützt. Wie bereits oben angesprochen ist es dabei besonders zweckmäßig, wenn der Tragarm den Lenkarm derart stützt, dass das Erweiterungsbauteil und insbesondere auch die Mehrgelenkanordnung insgesamt oder doch zumindest im Wesentlichen frei steht.

Zwar wäre es prinzipiell denkbar, dass das Erweiterungsbauteil in der Staustellung oder der Nutzstellung verklemmt wird. Bevorzugt ist jedoch ein Verrasten, was eine einfache Bedienung ermöglicht. So ist vorzugsweise eine Rastanordnung zum Verrasten des Erweiterungsbauteils in der Staustellung oder der Nutzstellung vorgesehen.

Rastelemente, beispielsweise Rastnasen, Rasthaken und dergleichen, könnten selbstverständlich an beliebiger Stelle des Lastenträgers und/oder des Kraftfahrzeuges vorgesehen sein. Bevorzugt ist jedoch die Rastanordnung so getroffen, dass sie Rastnasen oder Rastvorsprünge oder Rasthaken an einem Gelenk und/oder einer Führung der Gelenkanordnung umfasst.

Eine Ausführungsform kann beispielsweise vorsehen, dass eine Rastnase, ein Rasthaken oder ein Rastvorsprung zum Eingriff in eine exzentrisch zu einer Schwenkachse eines Schwenkgelenks der Gelenkanordnung angeordnete Rastaufnahme vorgesehen ist. So sind beispielsweise neben einer Kombination aus Lagervorsprung und Lageraufnahme des Schwenkgelenks, um die eine Schwenkbeweglichkeit möglich ist, exzentrisch ein Rastvorsprung und eine Rastaufnahme vorgesehen.

Eine weitere, insbesondere an einer Schwenk-/Schiebführung zwischen Lenkarm und Tragarm vorgesehene Maßnahme, aber auch an sonstiger Stelle realisierbare Ausführungsform der Erfindung kann vorsehen, dass die mindestens eine Rastnase an oder in einem Schwenkgelenk oder einer Schiebeführung zum Verrasten eines in der Schwenk- und/oder Schiebeführung geführten Führungselements angeordnet ist. Dieses Führungselement kann beispielsweise ein Kulissenfolger oder Führungsfolger und/oder ein Schwenkvorsprung sein.

Wie bereits erläutert, ist das Erweiterungsbauteil beispielsweise eine Leuchte. Besonders bevorzugt ist eine Mehrgelenkanordnung im Zusammenhang mit einem Kennzeichenträger. Weiterhin ist es vorteilhaft, wenn der Funktionsträger noch weitere Komponenten beinhaltet bzw. aufnimmt, beispielsweise einen Handgriff, mit dem eine Verriegelung des Lastenträgers entriegelbar und/oder verriegelbar ist, oder eine Halterung für ein Stoßfängerbaueil. Somit kann also beispielsweise ein Stoßfängerbauteil oder eine Stoßfängerkomponente unmittelbar am Lastenträger montiert werden. Die Verriegelung kann beispielsweise zum Verriegeln eines Schwenkteils vorgestehen sein, das bezüglich eines Grundgestells oder der Tragbasis des Lastenträgers schwenk- und/oder schiebebeweglich ist. So kann beispielsweise das Bauteil in eine Schwenkstellung verschwenkt werden, um einen Bewegungsraum für eine Heckklappe des Kraftfahrzeuges freizugeben.

Die Erfindung kann im Zusammenhang mit abnehmbaren Lastenträgern bzw. lösbar am Kraftfahrzeug montierbaren Lastenträgern vorteilhaft zur Anwendung gebracht werden. So weist der Lastenträger bei dieser Ausführungsform beispielsweise einen Kupplungshalter auf, mit dem er an einer Anhängekupplung des Kraftfahrzeuges befestigbar ist. Es versteht sich, dass auch eine sonstige Kupplungseinrichtung vorteilhaft ist, mit dem der Lastenträger an eine sonstige Kupplungsaufnahme oder Kupplungshalterung des Kraftfahrzeuges angekoppelt werden kann, z.B. eine Steckaufnahme.

Besonders bevorzugt und im Ausführungsbeispiel noch deutlich dargelegt ist jedoch die Anwendung der Erfindung bei einem Lastenträger, der fest an dem Kraftfahrzeug montiert bleibt, jedoch zwischen einer Gebrauchsstellung und einer Ruhestellung verstellbar an einer Schlitten-Führungsbasis geführt ist. In der Ruhestellung ist der Schlitten beispielsweise in eine Aufnahme am Kraftfahrzeug eingeschoben (in der Art einer Schublade), während er in der Gebrauchsstellung nach hinten vor das Heck des Kraftfahrzeuges vorsteht.

Es versteht sich, dass die oben genannten Kabelführung im Innenbereich bzw. entlang einer Schwenkachse eines Schwenklagers auch bei einer Gelenkanordnung für einen Lastenträger zweckmäßig ist, die nur ein einziges Schwenklager, ansonsten jedoch keine weiteren Gelenke, aufweist.

Bevorzugt ist eine Halteeinrichtung vorgesehen, die in einer Haltestellung den Schlitten in mindestens einer Stellung bezüglich der Schlitten-Führungsbasis hält und in einer Freigabestellung den Schlitten zu einer Verstellung bezüglich der Schlitten-Führungsbasis freigibt. Das Halteglied kann zweckmäßigerweise in der Haltestellung zu einem Verspannen des Schlittens bezüglich der Schlitten-Führungsbasis beitragen: Das mindestens eine Halteglied übt zweckmäßigerweise in der Haltestellung eine Spannkraft auf den Schlitten quer zu der Längsachse, beispielsweise horizontal, aus. Damit wird der Schlitten quasi gegen die Führungsbasis gedrückt oder gezogen, mithin also verspannt.

Wenn die Halteeinrichtung den Schlitten freigibt, kann dieser beispielsweise von Hand verstellt werden, um die Haltestellung und/oder die Freigabestellung zu erreichen. Aber auch ein insbesondere elektrischer oder fluidtechnischer Antriebsmotor zum Verstellen des Schlittens ist vorteilhaft. Das mindestens eine Halteglied ist vorteilhaft durch eine Federanordnung in die Haltestellung federbelastet.

Die Halteeinrichtung weist zweckmäßigerweise einen mit einem Antriebsschalter schaltbaren elektrischen oder fluidischen, also motorischen, Halteantrieb zum Verstellen des mindestens einen Halteglieds in die Haltestellung und/oder die Freigabestellung auf. Es ist aber auch möglich, dass das mindestens eine Halteglied manuell oder über einen manuell betätigbaren Halteantrieb verstellbar ist. Weiter kann der motorische oder manuelle Halteantrieb über ein Getriebe auf das Halteglied wirken, das auch zweckmäßigerweise einen Bestandteil des Halteantriebs bilden kann.

Der Lastenträger weist zweckmäßigerweise eine den Schlitten in die Gebrauchsstellung belastende Auswurf-Federanordnung auf. Es kann auch ein Schlittenantrieb mit beispielsweise einem elektrischen und/oder fluidtechnischen Motor zum Verstellen des Schlittens bezüglich der Schlitten-Führungsbasis vorgesehen sein.

Aber auch bei Lastenträgern, die beispielsweise an einer Anhängekupplung oder einer separaten, speziell für den Lastenträger vorgesehenen Halterung des Fahrzeugs dauerhaft befestigt oder lösbar befestigbar sind, ist es vorteilhaft, wenn sie bei Nichtgebrauch eine kompakte Bauform haben. Vorteilhaft hat der Lastenträger dann eine Befestigungseinrichtung zur lösbaren Befestigung an dem Fahrzeug, insbesondere an einer Anhängekupplung des Fahrzeugs.

Nachfolgend werden Ausführungsbeispiele der Erfindung anhand der Zeichnung dargestellt. Es zeigen:
- Figur 1: eine schematische Schrägansicht eines Lastenträgers in Gebrauchsstellung, der in ein Heck eines in
- Figur 2: von hinten schematisch dargestellten Kraftfahrzeuges einfahrbar und aus diesem ausfahrbar ist,
- Figur 3a: eine teilweise schematische Querschnittsansicht des Lastenträgers gemäß Figur 1 mit einer Halteeinrichtung gemäß einer ersten Ausführungsform,
- Figur 3b: eine Anordnung ähnlich wie Figur 3a, jedoch mit einer Halteeinrichtung in einer zweiten Ausführungsform,
- Figur 4: den Lastenträger gemäß Figur 1 von schräg oben,
- Figur 5: den Lastenträger gemäß Figur 1 von seiner Heckseite her gesehen in Ruhestellung bzw. Packstellung,
- Figur 6: eine hintere Teilansicht der Lastenträgers gemäß Figuren 1, 4, wobei ein Kennzeichenträger in seiner Staustellung und seiner Nutzstellung sowie zwei dazwischenliegenden Positionen gezeigt ist,
- Figur 7: eine Querschnittsansicht entsprechend Figur 6, und
- Figur 8: eine teilweise Ansicht eines Basiskörpers des in Figur 5 von hinten gezeigten Funktionsträgers, etwa entsprechend einem Ausschnitt A in Figur 5.

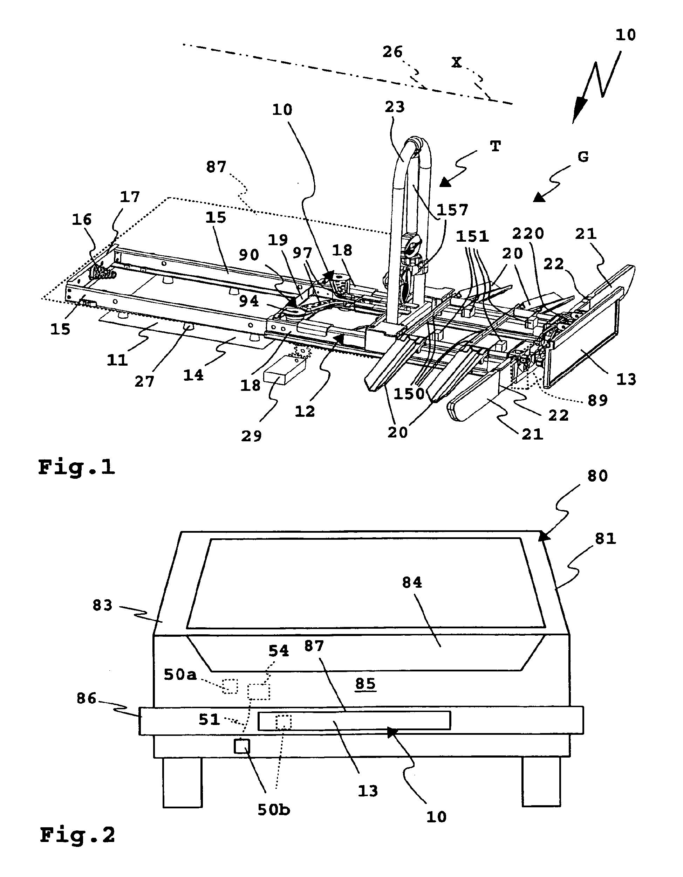

Ein Kraftfahrzeug 80, z.B. ein PKW, hat eine Karosserie 81 und ist durch einen Antriebsmotor, beispielsweise einen Elektro- oder Verbrennungsmotor, antreibbar. An einem Heck 83 der Karosserie 81 befindet sich unter einem Deckel 84 ein Gepäckabteil 85 sowie ein Heckstoßfänger 86. Das Kraftfahrzeug 80 ist beispielsweise ein Personenkraftwagen. Im Bereich des Heckstoßfängers 86 ist weiterhin eine Lastenträgeraufnahme 87 für einen Lastenträger 10, der in Figur 1 detaillierter dargestellt ist, vorgesehen. Die Lastenträgeraufnahme 87 ist eine Art Tasche oder Ausnehmung, in der eine Schlitten-Führungsbasis 11 des Lastenträgers 10, angeordnet ist. An der Schlitten-Führungsbasis 11 ist ein Schlitten 12 längsverschieblich entlang einer Längsachse 26 geführt, so dass er zwischen einer Gebrauchsstellung G (ausgezogen dargestellt), in der er vor das Heck 83 des Kraftfahrzeugs 80 vorsteht und mit einer Last beladbar ist, und einer Ruhestellung R (gestrichelt angedeutet) verstellbar ist, wobei der Schlitten 12 in der Ruhestellung R in einem Innenraum bzw. in der Lastenträgeraufnahme 87 aufgenommen ist, so dass er nicht vor das Heck 83 vorsteht.

Die Schlitten-Führungsbasis 11 weist vorliegend eine Halteplatte 14 auf, an deren Oberseite Führungsschienen 15 angeordnet sind, die zueinander parallel sind. Die Führungsschienen 15 sind zweckmäßigerweise auf Stützen 27 angeordnet, könnten aber auch unmittelbar auf der Halteplatte 14 oder an einem Karosseriebauteil des Kraftfahrzeugs 80 befestigt sein. Es versteht sich, dass die Halteplatte 14 nur beispielhaft für eine Befestigungseinrichtung steht, mit denen die Führungsschienen 15 am Kraftfahrzeug 80 befestigbar sind.

Ein etwa am Boden bzw. in Fahrtrichtung des Kraftfahrzeugs 80 vorn gelegener Endbereich der Führungsschienen 15 ist durch einen Querträger 16 verbunden, so dass insgesamt durch die Führungsschienen 15 und den Querträger 16 eine U-förmige Anordnung getroffen ist. Ein weiterer (nicht sichtbarer) Querträger verbindet die Führungsschienen 15 in einem Längsabstand zum Querträger 16, vorzugsweise in der Nähe des anderen Endbereichs der Führungsschienen 15. Der nicht sichtbare Querträger ist mit den Führungsschienen 15 an deren Unterseite verbunden. Der Querträger 16 hingegen bildet eine Stirnwand der Schlitten-Führungsbasis 11.

Vor dem Querträger 16 steht eine Auswurf-Feder 17 in Richtung des Schlittens 12 vor, die den Schlitten 12 in seiner Ruhestellung R in Richtung der Gebrauchsstellung G beaufschlagt.

Es ist aber auch möglich, dass ein elektrischer und/oder fluidtechnischer Schlittenantrieb zum Verstellen des Schlittens 12 in seine Ruhestellung R und/oder in Richtung der Gebrauchsstellung G vorgesehen ist, z.B. ein Riemen- oder Seilantrieb, ein pneumatischer, insbesondere doppeltwirkender Zylinder, ein Elektromotor oder dergleichen. Beispielsweise ist als ein Schlittenantrieb 29 ein Elektromotor vorgesehen, der die Läuferschienen 18 antreibt, z.B. mit einem Antriebsritzel mit an den Läuferschienen 18 angeordneten Zahnungen kämmt.

Der Schlitten 12 hat eine in Draufsicht im Wesentlichen rechteckige Gestalt. Dabei werden zwei Längsseiten dieses Rechteckes von Läuferschienen 18 gebildet, die an den Führungsschienen 15 geführt und längsverschieblich sind. Die Läuferschienen 18 sind auf der dem Querträger 16 zugewandten Seite durch einen Querträger 19 miteinander verbunden, auf den die Auswurf-Feder 17 in der Ruhestellung R wirkt. Am heckseitigen Ende des Schlittens 12, d.h. entgegengesetzt zum Querträger 19, befindet sich ein Funktionsträger 210, der die Läuferschienen 18 miteinander verbindet.

Der Schlitten 12 bildet eine Tragbasis 218 zum Auflegen von Lasten, beim Ausführungsbeispiel Fahrrädern. Diese sind auf Trägerrinnen 20 aufstellbar, die schwenkbeweglich an den Läuferschienen 18 gelagert sind. Zur Befestigung von beispielsweise Fahrrädern an den Trägerrinnen sind flexible Riemen 150 und vorteilhaft mit Ratschen versehene Halter 151 vorgesehen. Die Trägerrinnen 20 können zwischen die Läuferschienen 18 in eine Nichtgebrauchsstellung geschwenkt werden, in der der Schlitten 12 in Richtung der Schlitten-Führungsbasis 11, d.h. in die Ruhestellung R, verstellbar ist. Zu diesem Zweck werden auch Leuchten 21, die beispielsweise Bremslichter, Blinker, Rückfahrscheinwerfer und dergleichen umfassen, in Richtung der Läuferschienen 18 geschwenkt, wofür Schwenklager 22 zwischen dem Funktionsträger 210 und den Leuchten 21 vorgesehen sind. Weiter ist ein Kennzeichenträger 13 am Funktionsträger 210 schwenkbar gelagert.

Weiterhin ist es möglich, zum Verstellen des Schlittens 12 in die Ruhestellung R eine Stütze 23, vorteilhaft in Gestalt eines U-Bügels, in einen Zwischenraum 160 zwischen die Läuferschienen 18 zu schwenken. Dann ist also auch die Stütze 23 platzsparend untergebracht, so dass der Schlitten 12 in die Lastenträgeraufnahme 87 passt.

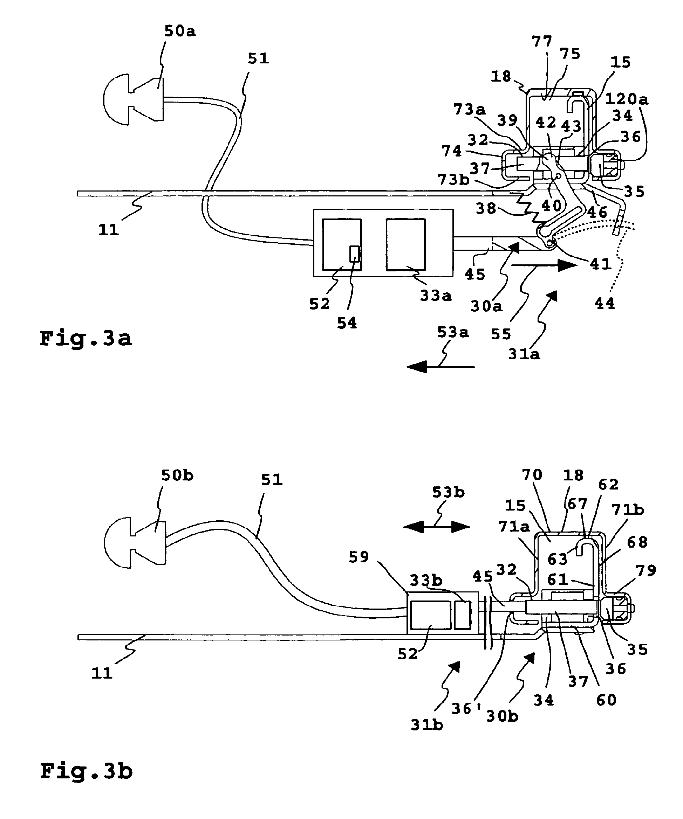

Zum Halten des Schlittens 12 in der Gebrauchsstellung G und/oder der Ruhestellung R, sind beispielhaft in den Figuren 3a, 3b dargestellte Halteeinrichtungen 30a, 30b vorgesehen. Die Halteeinrichtungen 30a, 30b sind vorliegend als Verriegelungseinrichtung 31a, 31b ausgestaltet und haben als Halteglieder 37 dienende Riegel 32, die durch elektrische Halteantriebe 33a, 33b betätigbar sind. Die Halteglieder 37 oder Riegel 32 sind an Lagern 34 schiebebeweglich zwischen einer Haltestellung oder Verriegelungsstellung, in der sie in Halteaufnahmen 35 des Schlittens 12 eingreifen, und einer Freigabestellung (in Fig. 3a, 3b dargestellt) verstellbar, in der die Riegel 32 außer Eingriff mit den Halteaufnahmen 35 sind, so dass der Schlitten 12 bezüglich der Schlitten-Führungsbasis 11 längsverschieblich ist, z.B. zum Verstauen in der Lastenträgeraufnahme 87.

Die Riegel 32 sind quer zur Auszugsrichtung bzw. Laufrichtung des Schlittens 12 bezüglich der Schlitten-Führungsbasis 11 angeordnet und vorliegend als eine Art Stift ausgestaltet. Die Riegel 32 bilden Halteglieder 37 zum ortsfesten Halten des Schlittens 12 bezüglich der Schlitten-Führungsbasis 11 bzw. des Kraftfahrzeuges 80.

Der Riegel 32 wirkt mit einem Seitenschenkel der Läuferschiene 18 in der Verriegelungsstellung zusammen, z.B. in der Haltestellung in eine dort angeordnete Halteaufnahme 35 eingreift. Der Riegel 32 greift in der Verriegelungsstellung oder Haltestellung zweckmäßigerweise nicht nur in die Halteaufnahme 35 ein, sondern durchgreift auch eine in der Ruhestellung R oder der Gebrauchsstellung G mit der Halteaufnahme 35 fluchtende Halteaufnahme 36 an der Führungsschiene 15. Dadurch sind die Schienen 15, 18 gegeneinander in Auszugsrichtung des Schlittens 12 bezüglich der Schlitten-Führungsbasis 11 verriegelt.

Der Riegel 32 der Halteeinrichtung 30b kann in der Lösestellung ganz aus der Läuferschiene 18 heraus verstellt werden (in Figur 3b nach links). Alternativ kann eine der Halteaufnahme 36 gegenüberliegende Halteaufnahme 36' auch als Langloch ausgestaltet sein.

Der Riegel 32 wird durch eine Feder 38 in seine verriegelungsstellung oder Haltestellung belastet. Die Feder 38 ist einerseits an der Schlitten-Führungsbasis 11 und andererseits an einem Betätigungshebel 39 befestigt, der den Riegel 32 betätigt. Der Betätigungshebel 39 ist schwenkbeweglich an einem Schwenklager 40 gelagert. Die Feder 38 sowie der Halteantrieb 33a greifen an einem Betätigungsende 41 des vorliegend winkeligen Betätigungshebels 39 an. Der Betätigungshebel 39 hat neben dem Betätigungsende 41 ein Wirkende 42, das in eine Aufnahme 43 des Riegels 32 eingreift. Das Wirkende 42 und das Betätigungsende 41 sind an einander entgegengesetzten Seiten bezüglich des Schwenklagers 40 angeordnet. Wird der Betätigungshebel 39 um das Schwenklager 40 geschwenkt, nimmt er den Riegel 32 in die Verriegelungsstellung oder die Entriegelungsstellung bzw. Freigabestellung mit.

Während ein Abtrieb 45 des Halteantriebs 33a am Betätigungsende 41 des Betätigungshebels 39 angreift, dort zweckmäßigerweise schwenkbeweglich gelagert ist, und nur in Richtung einer Verstellung (Pfeil 53a) des Riegels 32 in die Freigabestellung wirksam ist (in Gegenrichtung wirkt die Feder 38), betätigt ein Abtrieb 45 des Halteantriebs 33b den Riegel 32 sowohl in die Haltestellung oder Verriegelungsstellung als auch in die Freigabestellung (Pfeil 53b), die in Figur 3b dargestellt ist.

Das Halteglied 37 wirkt mit einer Halte- oder Spannkraft auf einen Distanzkörper 110a, der somit also ein Widerlager für das Halteglied 37 bildet.

Zweckmäßigerweise hat eine motorische Halteeinrichtung eines erfindungsgemäßen Lastenträgers eine manuell betätigbare Notbetätigung, z.B. einen Bowdenzug, der auf das Halteglied wirkt. Schematisch ist eine auf den Betätigungshebel 39 wirkende Notbetätigung 44 in Figur 3a eingezeichnet. Die Notbetätigung 44 ist zweckmäßigerweise an einem Halter 46 befestigt. Die Notbetätigung 44 steht beispielhaft für eine ebenfalls mögliche rein manuelle Ent- und/oder Verriegelung.

Die Halteantriebe 33a, 33b lassen sich durch Antriebsschalter 50a, 50b bequem betätigen. Die Antriebsschalter 50a, 50b sind frei am Kraftfahrzeug 80 positionierbar, beispielsweise am Heck 83. Die Antriebsschalter 50a, 50b sind vorliegend elektrische Schalter, die über Leitungen 51 mit einer zweckmäßigerweise eine Funktionsanzeigeeinrichtung 54 aufweisende Steuerung 52 verbunden sind, die ihrerseits wiederum die Halteantriebe 33a, 33b zu einer unidirektionalen Antriebsbewegung bzw. Entriegelungsbewegung 53a oder bidirektionalen Antriebsbewegung oder Ent- und Verriegelungsbewegung 53b ansteuert. Beispielsweise ist der Antriebsschalter 50a im Gepäckabteil 85 angeordnet. Der Antriebsschalter 50b hingegen ist unmittelbar in der Nähe des Lastenträgers 10, d.h. am Heck 83 und/oder dem Lastenträger 10 in einem Außenbereich des Kraftfahrzeuges 80 positioniert.

Die Führungsschienen 15 tragen und Führen die bezüglich der Schlitten-Führungsbasis 11 sozusagen ausziehbaren Läuferschienen 18, die man daher auch als Auszugsprofile bezeichnen kann. Jedenfalls sind die Führungsschienen 15 und die Läuferschienen 18 jeweils einstückig, wobei ihre Querkontur durch Umkanten, Umfalzen oder Umbiegen einzelner Abschnitte eines Grundkörpers beziehungsweise Ausgangsmaterials gebildet ist, zweckmäßigerweise einer Stahlplatte (als Grundkörper).

Die Führungsschienen 15 sind mit einem Befestigungsschenkel 60 auf der Halteplatte 14, die somit auch eine Bodenplatte bildet, befestigt Von dem Befestigungsschenkel 60 steht ein Stützschenkel 61 winkelig ab, vorliegend rechtwinkelig, zweckmäßigerweise L-förmig. Sozusagen als Lauffläche oder Lagerfläche für den Schlitten 12 steht ein Auflagerschenkel 62 zur Verfügung, der winkelig, vorteilhaft rechtwinkelig, vom Stützschenkel 61 absteht. Der Auflagerschenkel 62 und der Befestigungsschenkel 60 verlaufen im Wesentlichen parallel zueinander. Vom Auflagerschenkel 62 steht weiterhin ein Verstärkungsschenkel 63 winkelig ab, vorteilhaft rechtwinkelig.

Eine freie Oberseite der Führungsschiene 15 dient zum Auflegen und Lagern der Läuferschiene 18, das heißt, die Außenseite des Auflagerschenkels 62 bildet eine Lagerfläche 67. An der vom Verstärkungsschenkel 63 abgewandten Seite hat der Stützschenkel 61 weiterhin eine Führungsfläche 68 zum seitlichen Führen der Läuferschiene 18.

Die Läuferschienen 18 sind an den Führungsschienen 15 gelagert und auf diese aufgelegt. Sie begrenzen einen im Wesentlichen U-förmigen Innenraum 75. Die Läuferschienen 18 haben eine Hut- oder Omega-förmige Gestalt. Die Läuferschienen 18 weisen einen Grundschenkel 70 auf, von dem Seitenschenkel 71a, 71b winkelig, vorliegend rechtwinkelig, abstehen. Insofern wird also dadurch eine U-förmige Querschnittskontur gebildet. Der Grundschenkel 70 bildet mit einer unterseitigen Lagerfläche 77 zudem einen Lagerschenkel zum Lagern der Läuferschienen 18 auf den Führungsschienen 15. Die Lagerflächen 67, 77 könnten beispielsweise mit einer Gleitbeschichtung oder mit Gleitstücken versehen sein. Die freien Querendbereiche der Läuferschiene 18 sind mit Verstärkungsrippen 79 versehen, deren Vorsprungschenkel 73a, 73b durch eine Grundwand 74 miteinander verbunden sind. Der Vorsprungschenkel 73a steht winkelig von der Grundwand des Seitenschenkels 71a, 71b und verläuft parallel zum Vorsprungschenkel 73b. Die Grundwand 74 und die Seitenschenkel 71a oder 71b sind ebenfalls parallel zueinander.

Durch die Halteeinrichtungen 30a oder 30b ist ein Verriegeln und Halten des Schlittens 12 an der Schlitten-Führungsbasis 11 in der Gebrauchsstellung und/oder der Ruhestellung möglich. Eine zusätzliche Sicherheit und für den Fahrbetrieb optimale Verspannung wird durch Spanneinrichtungen 90 erreicht, die die Führungsschienen 15 und die Läuferschienen 18 jeweils miteinander verspannen. Mit Hilfe von Betätigungshebeln 97 können Zuganker 94 betätigt werden, so dass diese die Läuferschienen 18 in Richtung der Führungsschienen 15 verspannen.

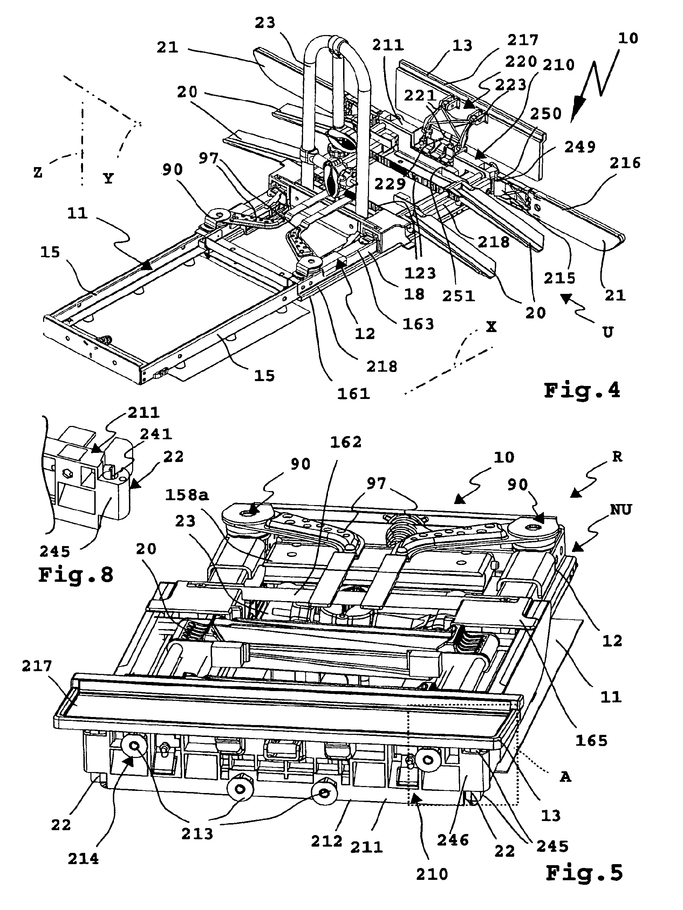

Aus den obigen Ausführungen wird deutlich, dass insbesondere durch die Ausgestaltung der Profile der Führungsschienen 15 und der Läuferschienen 18, aber auch durch die entsprechende Verspannung und Verriegelung eine stabile Konstruktion realisiert ist, die, wie aus Figur 5 ersichtlich, in eine kompakte Staustellung oder Ruhestellung bringbar ist.

Es versteht sich, dass das Tragegestell 163 auch Bestandteil eines lösbar am Kraftfahrzeug 80 befestigbaren Lastenträgers sein könnte, beispielsweise in der Art des in DE 10 2008 012 689 A1.

Der Funktionsträger 210, der den Schlitten 12 abschließt, umfasst einen Basiskörper 211, an dessen Querseiten sich die Schwenklager 122 mit den schwenkbaren Leuchten 21 befinden.

Bei dem Basiskörper 211 handelt es sich um ein Spritzteil oder Spritzgussteil, zweckmäßigerweise aus Kunststoff. Der Funktionsträger 210 vereint eine Vielzahl von Funktionen, insbesondere elektrische Funktion (Stromversorgung und Halterung der Leuchten 21), verstärkt den Schlitten 12, insbesondere quer zur Längsachse 26, und dient mit seinem Basiskörper 211 zudem noch als Lager und Halterung für ein Stoßfängerteil 89. Hierfür sind an der vom Schlitten 12 abgewandten Außenseite (Heckseite) des Basiskörpers 211 Montagevorsprünge 213 vorgesehen, mit denen ein Stoßfängerteil 89 am Basiskörper 211 befestigbar ist. Die Montagevorsprünge 213 enthalten in an sich bekannter Weise Rechts-Links-Gewinde, dergestalt, dass das Stoßfängerteil 89, das einen Abschnitt des Heckstoßfängers 86 bildet, in der gewünschten Tiefe und Höhe am Funktionsträger 210 montierbar beziehungsweise ausrichtbar ist.

Mittels einer Gelenkanordnung 220 ist es möglich, den Kennzeichenträger 13, der als eine Art Platte ausgestaltet ist, über das Stoßfängerteil 89 in der Art eines Galgens wegzuschwenken.

Die beiden Schwenklager 22 für die Leuchten 21, die insoweit Erweiterungsbauteile 216 bilden, realisieren eine erste Gelenkanordnung 215. Die Gelenkanordnung 220 lagert den Kennzeichenträger 13, der insoweit ein Erweiterungsbauteil 217 bildet. Die Gelenkanordnungen 215, 220 lagern die Erweiterungsbauteile 216, 217 auf innovative Weise bezüglich einer Tragbasis 218, die durch ein Tragegestell 163 gebildet wird, auf eine nachfolgend beschriebene innovative Weise zwischen einer Nutzstellung U, in der die Erweiterungsbauteile 216, 217 in einen Außenraum vor die Tragbasis 218 vorverstellt sind, und einer Staustellung NU, in der die Erweiterungsbauteile in einen Ruheraum zu der Tragbasis 218 hin verstellt sind.

Beispielsweise sind die beiden Leuchten 21 zu den Läuferschienen 18 hin verschwenkt (Figur 5) wenn sie die Staustellung NU einnehmen, während sie in Fahrzeugquerrichtung bzw. Richtung der Y-Achse seitlich vor den Basiskörper 211, sozusagen in dessen Verlängerung, in einen Außenraum vorstehen, wenn sie die Nutzstellung U einnehmen.

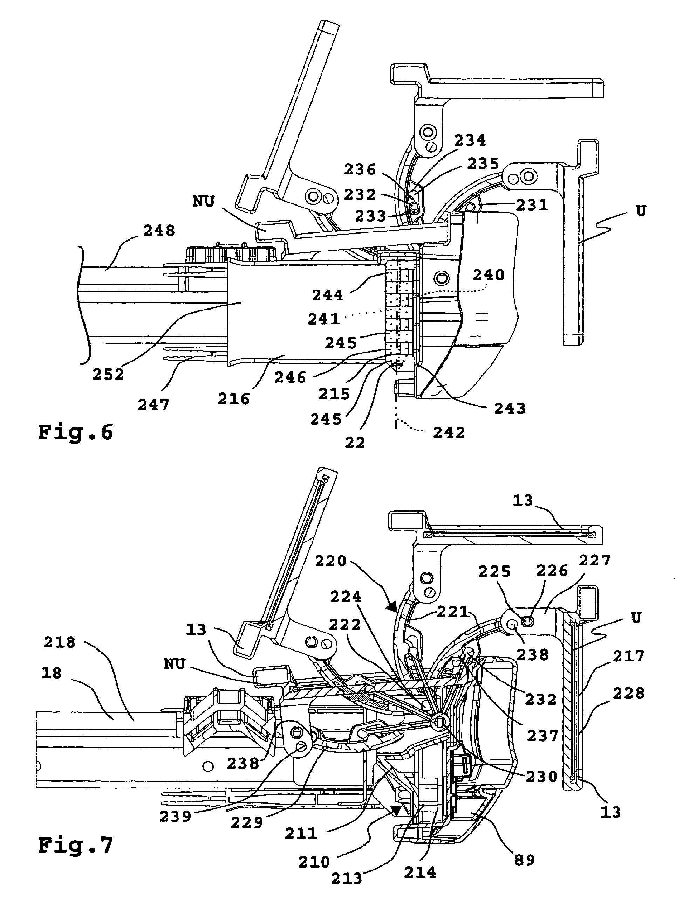

Der Kennzeichenträger 13 hingegen hängt sozusagen in der Nutzstellung U heckseitig hinten vor dem Stoßfängerteil 89, während er in der Nichtgebrauchsstellung oder Staustellung NU in Richtung der Trägerrinnen 20 bzw. zu den Läuferschienen 18 hin verstellt ist und (siehe Figuren 6, 7) nicht nach oben vor das Stoßfängerteil 89 vorsteht. Dann kann der Schlitten 12 in der Art einer Schublade in die Lastenträgeraufnahme 87 bequem eingeschoben werden, weil nämlich die Erweiterungsbauteile 216, 217 (sowie auch weitere, hier nicht weiter interessierende Erweiterungs- und Stützbauteile, z.B. die Stütze 23 und die Trägerrinnen 20) bezogen auf die heckseitige Ansicht des Lastenträgers 10 bzw. des Stoßfängerteils 89 nicht nach außen vor das letztgenannte vorstehen.

Die Gelenkanordnung 215 realisiert ein innovatives Konzept zur Führung einer elektrischen Versorgungsleitung, das nebenbei bemerkt, auch bei der Gelenkanordnung 220 zum Einsatz kommen kann, während bei der Gelenkanordnung 220 durch seine Ausgestaltung als Mehrgelenkanordnung die Bewegungsfreiheit des Erweiterungsbauteiles 217 relativ zur Tragbasis 218 deutlich erweitert ist.

Die Gelenkanordnung 220 umfasst Tragarme 221, die an Schwenklagern 222 bezüglich der Tragbasis 218, konkret des Basiskörpers 211, schwenkbar gelagert sind. Die Tragarme 221 können mit Vorteil miteinander verbunden sein, so dass sie sich gegenseitig versteifen. Beim Ausführungsbeispiel ist hierfür eine Verbindungsplatte 223 vorgesehen, wobei selbstverständlich auch eine Verstrebung oder sonstige Verbindung denkbar ist. Die Verbindungsplatte 223 ist durch eine Rippenstruktur zusätzlich noch verstärkt, so dass sie bei leichtem Gewicht eine hohe Stabilität aufweist. Durch die Schwenklager 222 können die Tragarme 221 um eine Schwenkachse 224 bezogen auf die Tragbasis 218 schwenken.

An den von den Schwenklagern 222 entgegengesetzten Längsendbereichen haben die Tragarme 221 weitere Schwenklager 225, mit denen der Kennzeichenträger 13 bzw. das Erweiterungsbauteil 217 schwenkbar an den Tragarmen 221 gelagert ist, so dass es um eine Schwenkachse 226 relativ zu den Tragarmen 221 schwenken kann. Die Schwenklager 225 umfassen Lagervorsprünge 227, die winkelig von einer Platte 228 des Kennzeichenträgers 13 vorstehen. Die Lagervorsprünge 227 stehen vorliegend rechtwinkelig von der Platte 228 ab. An der heckseitigen, freien Seite der Platte 228 kann ein Kennzeichen angebracht werden.

Eine Länge der Tragarme 221 ist nunmehr so bemessen, dass sie in der Art von Auslegerarmen in der Nutzstellung U das Stoßfängerteil 89 überragen oder übergreifen, so dass der Kennzeichenträger 13 frei vor dem Stoßfängerteil 89 zu liegen oder genauer gesagt zu hängen kommt. Mithin ist also zwischen der Erweiterungsbauteil 217 und dem Stoßfängerteil 89 ein Abstand vorhanden, so dass Beschädigungen der optisch nicht unwesentlichen freien Rückseite bzw. im Freien stehenden Außenseite des Stoßfängerteils 89 vermieden werden (siehe Figuren 6, 7).

Weiterhin ist durch einen gekrümmten Verlauf der Tragarme 221 sowie die vorstehenden Lagervorsprünge 227 (diese Maßnahmen ergänzen sich, können aber auch einzeln vorgesehen sein) eine Art galgenartige Konfiguration gegeben, so dass der Kennzeichenträger 13 sozusagen frei über das Stoßfängerteil 89 nach hinten vorsteht.

Bereits durch die an den entgegengesetzten Endbereichen der Tragarme 221 jeweils angeordneten Schwenklager 222, 225 ist eine Mehrgelenkanordnung gebildet. Die Bewegung der Tragarme 221, die man auch als Tragarmanordnung bezeichnen kann, wird durch einen Lenkarm 229 gelenkt und geführt. Der Lenkarm 229 ist vorteilhaft zwischen den Tragarmen 221 angeordnet, insbesondere quermittig.

Der Lenkarm 229 ist schwenkbeweglich bezüglich der Tragbasis 218 bzw. des Basiskörpers 211 gelagert, wofür ein Schwenklager 230 vorgesehen ist. Beispielsweise ist an einem Endbereich des Lenkarmes 229 eine Lagerbuchse angeordnet, die von einer bezüglich des Basiskörpers 211 ortsfesten Lagerachse durchdrungen ist. Am dazu entgegengesetzten Endbereich ist eine Schwenk-/Schiebeführung 231 oder Schwenk-Schiebelagerung zur beweglichen Kopplung und Führung der Tragarme 221 mit dem Lenkarm 229 vorgesehen. Die langlochartige Schwenk/Schiebeführung 231, in die ein Führungselement 232 eingreift, derart, dass das Führungselement 232 sowohl in der Schwenk-/Schiebeführung 231 schwenken kann als auch darin linear beweglich ist, befindet sich an der Verbindungsplatte 223. Die Schwenk-/Schiebeführung 231 ist an einer dem Lenkarm 229 zugewandten Seite der Verbindungsplatte 223, konkret einer Unterseite bezogen auf die Nutzstellung U, angeordnet. Die Schwenk-/Schiebeführung 231 umfasst beispielsweise eine Art Lagerbock.

Die lineare Bewegung findet zwischen zwei Endanschlägen 233, 234 statt, die in dem Langloch 235 vorgesehen ist. Ferner ist durch die im Außenumfang bzw. Führungsbereich kreisrunde Ausgestaltung des Führungselements 232, jedenfalls durch ausreichendes Spiel desselben innerhalb des Langloches 235, gewährleistet, dass das Führungselement 232 in der Schwenk/Schiebeführung 231 auch schwenken kann.

Der Endanschlag 234 definiert eine Endposition des Lenkarms 229 relativ zu den Tragarmen 221. Sowohl in der Nutzstellung U als auch in der Staustellung NU schlägt das Führungselement 232 an dem Endanschlag 234 ab (Figuren 6, 7).

In den dazwischenliegenden Positionen bewegt sich das Führungselement 232 innerhalb des Langloches 235 in Richtung des anderen Endanschlags 233, was mit Vorteil dazu genutzt werden kann, die Schwenkbewegung des oder der Tragarme 221 zu lenken.

In der Nutzstellung U stützt der Lenkarm 229 die Tragarme 221 ab. Beim Ausführungsbeispiel ist ein Abstand zwischen dem Lenkarm 229 und den Tragarmen 221 bzw. deren Verbindungsplatte 223 relativ knapp. Dennoch ist eine ausreichende Stützfunktion gegeben. Es versteht sich, dass durch entsprechend größere Auslenkung bzw. einen größeren Abstand zwischen Lenkarm und Tragarm einer erfindungsgemäßen Gelenkanordnung auch bessere Abstände und somit Hebelverhältnisse erzielbar sind, sofern entsprechend Bauraum vorhanden ist. Jedenfalls verhindert der Lenkarm 229 zuverlässig, dass die Tragarme 221 nach vertikal unten auf das zu übergreifende Bauteil aufschlagen bzw. daran anliegen, so dass im konkreten Fall das Stoßfängerteil 89 optimal vor Beschädigungen, insbesondere Zerkratzen oder Aufscheuern geschützt ist.

Die Schwenkachse 224 der Schwenklager 222 und die Schwenkachse des Schwenklagers 230 sind vorliegend nahe beieinander angeordnet, wobei durch einen größeren Abstand ein besseres Hebelverhältnis zwischen Tragarm und Lenkarm der Gelenkanordnung 220 erzielbar wäre.

Nun wäre es zwar denkbar, dass der Kennzeichenträger 13 bzw. das Erweiterungsbauteil 217 bereits durch seine Gewichtskraft in den beiden Stellungen U oder NU gehalten ist.

Das Erweiterungsbauteil 217 ist jedoch vorteilhaft mit Hilfe der Rastanordnung 236 in der Nutzstellung U und in der Staustellung NU verrastbar. Die Rastanordnung 236 umfasst eine Rastnase 237, die an oder in der Schwenk-/Schiebeführung 231 angeordnet ist. Die Rastnase 237 befindet sich zwischen den Endanschlägen 233, 234 und steht in Richtung des Langloches 235 vor. Wenn das Führungselement 232 sich zwischen den Endanschlägen 233, 234 bewegt, muss es an der Rastnase 237 vorbei. Die Rastnase 237 ist zweckmäßigerweise so getroffen, dass sie das Führungselement 232, das insofern einen Rastvorsprung bildet, zumindest in der Nutzstellung U verrastet, siehe Figuren 6, 7. Bei der Bewegung in Richtung der Nichtgebrauchsstellung oder Staustellung NU hingegen kann das Führungselement 232 an der Rastnase 237 vorbeigleiten (Zwischenstellungen in Figuren 6, 7), um schließlich in der Staustellung NU wieder durch die Rastnase 237 in Richtung des Endanschlages 234 verrastet zu werden.

Auch die Tragarme 221 haben Rastnasen, nämlich Rastnasen 238, die neben dem dem Erweiterungsbauteil 217 zugeordneten Schwenklager 222 angeordnet sind. Die Rastnasen 238 sind exzentrisch zur Schwenkachse 226 und greifen in der Nutzstellung U in Rastausnahmen 239 ein, die ebenfalls neben den Schwenklagern 225 angeordnet sind, allerdings am Lagervorsprung 227 und somit am Erweiterungsbauteil 217. Somit wird also der Kennzeichenträger 13 in der Nutzstellung U relativ zur Gelenkanordnung 220 verrastet, so dass er eine beim Fahrbetrieb des Kraftfahrzeuges ausreichende Stabilität aufweist. Es versteht sich, dass auch eine Verriegelung noch denkbar wäre dergestalt, dass der Kennzeichenträger 13 oder ein sonstiges Erweiterungsbauteil eines erfindungsgemäßen Funktionsträgers in der Nutzstellung oder der Staustellung verriegelt ist.

Das nachfolgend beschriebene elektrische Leitungsführungskonzept der Gelenkanordnung 215 könnte auch beispielsweise bei der Gelenkanordnung 220 Anwendung finden, um das vom Kennzeichenträger 13 gehaltene Kennzeichen zu beleuchten.

Elektrische Leitungen 240 zur elektrischen Versorgung der Leuchten 21 sind nämlich in Lagerkavitäten 241 geführt, die entlang von Schwenkachsen 242 der Schwenklager 22 verlaufen. Die Lagerkavität 241 eines Schwenklagers 22 erstreckt sich über dessen nahezu gesamte Längslänge oder vorteilhaft über die gesamte Längslänge bezüglich der Schwenkachse 242, so dass die Leitungen 240 beim Schwenken der Leuchten 21 nur in einem äußerst geringen Maß verdrillt werden. Zudem ist ein optimaler Knickschutz für die Leitungen 240 realisiert, da diese sozusagen außerhalb des bewegten Bereiches der Schwenklager 22 geführt sind.

Die Lagerkavität 241 wird durch jeweils ein erstes und ein zweites Lagerelement 243, 244 begrenzt. Die Lagerelemente 243, 244 haben beispielsweise klauenartige Schwenkvorsprünge 245, 246, die axial bezogen auf die Schwenkachse 242 nebeneinander angeordnet sind und aneinander entlang gleiten. Bei der Ausführungsform gemäß Figuren 5, 8 sind die Schwenkvorsprünge 245, 246 so getroffen, dass der Schwenkvorsprung 245 des Lagerelements 243 zwischen zwei Schwenkvorsprüngen 246 des Lagerelements 244 angeordnet ist. Eine endseitige Sicherung kann beispielsweise durch eine Niete oder einen Bolzen realisiert sein. Beim Ausführungsbeispiel gemäß Figur 6 hingegen sind die Schwenkvorsprünge 245, 246 in der Art eines Klavierbandes abwechselnd nebeneinander angeordnet.

Bei dem Funktionsträger 210 sind noch weitere, innovative Konzepte realisiert, die selbstverständlich als unabhängige Erfindung angesehen werden können:
So sind an den Schwenklagern 22 Tragarme 252 mit Klemmund/oder Rastvorsprüngen 247 angeordnet, die mit entsprechenden Klemmaufnahmen der Leuchten 21 verklemmen. Die Klemmund/oder Rastvorsprünge 247 umfassen beispielsweise gabelartige Elemente, die in eine Richtung voneinander weg eine Spannung aufweisen, so dass sie beim Eintritt in eine Aufnahme an deren Innenseite im Klemmsitz anliegen.

Es versteht sich, dass auch ein Verklemmen oder eine Verrastung des Schlittens 12 bezüglich der Schlitten-Führungsbasis 11 in der Ruhestellung R vorgesehen sein könnte. Beispielsweise kann man sich vorstellen, dass Klemm- und/oder Rastvorsprünge in der Art der Klemmvorsprünge 247 vorgesehen sind, die in entsprechende Klemm- bzw. Rastaufnahmen an der Lastenträgeraufnahme 87 oder der Schlitten-Führungsbasis 11 eingreifen.

Weiterhin kann es zweckmäßig sein, wenn sozusagen vor und hinter dem Funktionsträger 210 angeordnete Bauteile mit ein und demselben Befestigungsbauteil verbunden werden. So können beispielsweise zwei der Montagevorsprünge 213, die insoweit also Bestandteile einer Halterung 214 für das Stoßfängerteil 89 bilden, mit Stäben 248 verbunden sein, um die die Trägerrinnen 22 schwenken. Die Stäbe 248 erstrecken sich oberhalb der Läuferschienen 18.

Weiterhin ist es vorteilhaft, wenn auch die Gelenkanordnung 215 eine Verrastung vorsieht, so z.B. eine Rastanordnung 249. Das Lagerelement 244 bzw. das freie Element seines Schwenkvorsprungs 246 kämmt zweckmäßigerweise oder verrastet zweckmäßigerweise mit einer Rippenstruktur 250 am Basiskörper 211.

Bereits durch die Verrippung und sonstige Verstärkung des Basiskörpers 211 ist eine stabile Struktur des Funktionsträgers 210 gegeben. Es versteht sich, dass zweckmäßigerweise noch weitere Verstärkungsmaßnahmen vorgesehen sein können, so z.B. ein Querverbinder 251 zur Verbindung der Tragprofile 161 bildenden Läuferschienen 18 in unmittelbarer Nachbarschaft zum Basiskörper 211. Bevorzugt ist der Querverbinder 251 plattenartig oder als Platte ausgestaltet, was ihm eine hervorragende Stabilität verleiht.

## Patentansprüche

1. Lastenträger für ein Kraftfahrzeug (80), insbesondere einen Personenkraftwagen, mit einem ein Tragegestell (163) aufweisenden Tragbasis (218) zum Tragen von Lasten, wobei der Lastenträger einen Funktionsträger (210) umfasst, an dem ein Erweiterungsbauteil (216, 217) zwischen einer Nutzstellung (U), in der das Erweiterungsbauteil (216, 217) in einen Außenraum vor der Tragbasis (218) vor verstellt ist, und einer Staustellung (NU), in der das Erweiterungsbauteil (216, 217) in einen Ruheraum zu der Tragbasis (218) hin verstellt ist, mittels einer Gelenkanordnung (215, 220) beweglich gelagert ist, **dadurch gekennzeichnet, dass** die Gelenkanordnung (220) als eine Mehrgelenkanordnung ausgestaltet ist, **so dass das Erweiterungsbauteil (216, 217) um mehre**re **Schwenkachsen oder um eine nicht ortsfeste Schwenkachse schwenkbeweglich gelagert ist.**

2. Lastenträger nach Anspruch 1 oder dessen oberbegriff, **dadurch gekennzeichnet, dass** die Gelenkanordnung (215, 220) mindestens ein Schwenklager (22) umfasst, bei dem ein erstes Lagerelement (243) und ein zweites Lagerelement (244) um eine Schwenkachse (242) schwenkbar aneinander gelagert sind und um eine entlang der Schwenkachse (242) verlaufende Lagerkavität (241) zur Aufnahme einer elektrischen Leitung (240) zur elektrischen Versorgung des Erweiterungsbauteils (216, 217) schwenken.

3. Lastenträger nach Anspruch 2, **dadurch gekennzeichnet, dass** die Lagerkavität (241) von mindestens einem Schwenkvorsprung des ersten Lagerelements (243) und/oder des zweiten Lagerelements (244) insbesondere unmittelbar begrenzt ist.

4. Lastenträger nach einem der vorhergehenden Ansprüche, **dadurch gekennzeichnet, dass** die Gelenkanordnung (215, 220) mindestens einen Tragarm (221, 252) zum Tragen des Erweiterungsbauteils (216, 217) umfasst.

5. Lastenträger nach Anspruch 4, **dadurch gekennzeichnet, dass** der mindestens eine Tragarm (221, 252) als ein Auslegerarm ausgestaltet ist, der in der Nutzstellung (U) ein zwischen dem Ruheraum und dem Außenraum angeordnetes Bauteil (89) übergreift derart, dass das Erweiterungsbauteil (216, 217) in dem Außenraum vor dem Bauteil angeordnet ist.

6. Lastenträger nach Anspruch 4 oder 5, **dadurch gekennzeichnet, dass** der mindestens eine Tragarm (221, 252) in der Staustellung (NU) zumindest im Wesentlichen in dem Ruheraum angeordnet ist und/oder dass der mindestens eine Tragarm (221, 252) und das Erweiterungsbauteil (216, 217) in Staustellung (NU) etwa parallel verlaufen und/oder aneinander anliegen.

7. Lastenträger nach einem der Ansprüche 4 bis 6, **dadurch gekennzeichnet, dass** die Gelenkanordnung (215, 220) einen Lenkarm (229) umfasst, der die Bewegung des mindestens einen Tragarms (221, 252) zwischen der Staustellung (NU) und der Nutzstellung (U) führt und/oder mindestens eine Endlage der Bewegung definiert.

8. Lastenträger nach einem der Ansprüche 4 bis 7, **dadurch gekennzeichnet, dass** der mindestens eine Tragarm (221, 252) und der Lenkarm (229) mittels einer Schwenk- und/oder Schiebeführung miteinander gekoppelt sind.

9. Lastenträger nach einem der Ansprüche 4 bis 8, **dadurch gekennzeichnet, dass** der Lenkarm (229) und der mindestens eine Tragarm (221, 252) mittels Schwenklagern an einem Basiskörper (211) des Funktionsträgers (210) schwenkbar gelagert sind und/oder Bestandteile eines Viergelenks sind und/oder dass der Lenkarm (229) den mindestens einen Tragarm (221, 252) in Nutzstellung (U) und/oder der Staustellung (NU) stützt.

10. Lastenträger nach einem der vorhergehenden Ansprüche, **dadurch gekennzeichnet, dass** er eine Rastanordung zum Verrasten des Erweiterungsbauteils (216, 217) in der Staustellung (NU) und/oder der Nutzstellung (U) aufweist.

11. Lastenträger nach Anspruch 10, **dadurch gekennzeichnet, dass** die Rastanordung mindestens eine in oder an einem Gelenk und/oder einer Führung der Gelenkanordnung (215, 220) angeordnete Rastnase (237, 238) umfasst.

12. Lastenträger nach Anspruch 11, **dadurch gekennzeichnet, dass** die mindestens eine Rastnase (237, 238) zum Eingriff in eine exzentrisch zu einer Schwenkachse (226) eines Schwenkgelenks (225) angeordnete Rastaufnahme (239) vorgesehen ist und/oder die mindestens eine Rastnase (237, 238) an oder in einer Schwenk- und/oder Schiebeführung (231) zum Verrasten eines in der Schwenk- und/oder Schiebeführung (231) geführten Führungselements (232) angeordnet ist.

13. Lastenträger nach einem der vorhergehenden Ansprüche, **dadurch gekennzeichnet, dass** das Erweiterungsbauteil (216, 217) eine Leuchte (21) und/oder einen Kennzeichenträger (13) umfasst und/oder der Funktionsträger (210) einen Handgriff zum Betätigen einer Verriegelung des Lastenträgers und/oder mindestens eine Halterung (214) für ein Stoßfängerteil (89) umfasst.

14. Lastenträger nach einem der vorhergehenden Ansprüche, **dadurch gekennzeichnet, dass** die Tragbasis (218) etwa in Richtung einer Längsachse (26) verlaufende Tragprofile (161) aufweist, die in Richtung einer zur Längsachse (26) quer verlaufenden Querachse (Y) durch einen Querträger (162) und/oder den Funktionsträger (210) miteinander verbunden sind.

15. Lastenträger nach einem der vorhergehenden Ansprüche, **dadurch gekennzeichnet, dass** die Tragbasis (218) Bestandteil eines Schlittens (12) ist, wobei der Schlitten (12) in einer Gebrauchsstellung weiter als in einer Ruhestellung vor die Schlitten-Führungsbasis vorsteht und/oder dass er eine Befestigungseinrichtung zur lösbaren Befestigung an dem Fahrzeug (80), insbesondere an einer Anhängekupplung des Fahrzeugs (80), aufweist.

## Claims

1. Load carrier for a motor vehicle (80), in particular a car, comprising a carrying base (218) having a carrying rack (163) for carrying loads, wherein the load carrier comprises a function carrier (210) on which an extension component (216, 217) is movably mounted by means of ajoint arrangement (215, 220) for movement between a position of use (U) in which the extension component (216, 217) is moved into an exterior in front of the carrying base (218) and a stowage position (NU) in which the extension component (216, 217) is moved towards the carrying base (218) into a neutral space, **characterised in that** the joint arrangement (220) is designed as a multi-joint arrangement, so that the extension component (216, 217) is pivotably mounted for pivoting about several pivot axes or about a non-fixed pivot axis.

2. Load carrier according to claim 1 or the preamble thereof, **characterised in that** the joint arrangement (215, 220) comprises at least one pivot bearing (22) in which a first bearing element (243) and a second bearing element (244) are pivotably mounted on one another for pivoting about a pivot axis (242) and pivot about a bearing cavity (241) extending along the pivot axis (242) for the accommodation of an electric line (240) for the power supply of the extension component (216, 217).

3. Load carrier according to claim 2, **characterised in that** the bearing cavity (241) is, in particularly directly, bounded by at least one pivoting projection of the first bearing element (243) and/or the second bearing element (244).

4. Load carrier according to any of the preceding claims, **characterised in that** the joint arrangement (215, 220) comprises at least one support arm (221, 252) for supporting the extension component (216, 217).

5. Load carrier according to claim 4, **characterised in that** the at least one support arm (221, 252) is designed as a cantilever arm which in the position of use (U) laps a component (89) placed between the neutral space and the exterior in such a way that the extension component (216, 217) is placed in the exterior in front of the component.

6. Load carrier according to claim 4 or 5, **characterised in that** the at least one support arm (221, 252) is in the stowage position (NU) at least substantially placed in the neutral space, and/or **in that** the at least one support arm (221, 252) and the extension component (216, 217) in the stowage position (NU) extend approximately parallel to one another and/or bear against one another.

7. Load carrier according to any of claims 4 to 6, **characterised in that** the joint arrangement (215, 220) comprises a link arm (229) which guides the movement of the at least one support arm (221, 252) between the stowage position (NU) and the position of use (U) and/or at least defines an end position of the movement.

8. Load carrier according to any of claims 4 to 7, **characterised in that** the at least one support arm (221, 252) and the link arm (229) are coupled to one another by a swivel and/or slide guide.

9. Load carrier according to any of claims 4 to 8, **characterised in that** the link arm (220) and the at least one support arm (221, 252) are pivotably mounted on a base body (211) of the function carrier (210) by means of pivot bearings and/or are parts of a four-bar linkage, and/or **in that** the link arm (220) supports the at least one support arm (221, 252) in the position of use (U) and/or in the stowage position (NU).

10. Load carrier according to any of the preceding claims, **characterised in that** it comprises a latching arrangement for latching the extension component (216, 217) in the stowage position (NU) and/or in the position of use (U).

11. Load carrier according to claim 10, **characterised in that** the latching arrangement comprises at least one latching lug (237, 238) in or at a joint and/or a guide of the joint arrangement (215, 220).

12. Load carrier according to claim 11, **characterised in that** the at least one latching lug (237, 238) is provided for engagement with a latching receptacle (239) mounted eccentrically relative to a pivot axis (226) of a swivel joint (225), and/or **in that** the at least one latching lug (237, 238) is located on or in a swivel and/or slide guide (231) for latching a guide element (232) guided in the swivel and/or slide guide (231).

13. Load carrier according to any of the preceding claims, **characterised in that** the extension component (216, 217) comprises a lamp (21) and/or a licence plate bracket (13), and/or **in that** the function carrier (210) comprises a handle for operating a lock of the load carrier and/or at least one bracket (214) for a bumper part (89).

14. Load carrier according to any of the preceding claims, **characterised in that** the carrying base (218) has carrying profiles (161) which extend approximately in the direction of a longitudinal axis (26) and which are joined to one another by a crossmember (162) and/or by the function carrier (210) in the direction of a transverse axis (Y) perpendicular to the longitudinal axis (26).

15. Load carrier according to any of the preceding claims, **characterised in that** the carrying base (218) is a part of a slide (12), the slide (12) projecting farther in front of the slide guide base in a position of use than in an inoperative position, and/or **in that** it comprises a fastening device for releasable fastening to the vehicle (80), in particular to a trailer coupling of the vehicle (80).

## Revendications

1. Support de charges pour un véhicule automobile (80), en particulier une voiture particulière, comprenant une base de support (218) présentant un châssis de support (163) et servant à supporter des charges, sachant que le support de charges comprend un support fonctionnel (210), au niveau duquel est supporté de manière mobile, au moyen d'un ensemble d'articulation (215, 220), un élément d'extension (216, 217) entre une position d'utilisation (U), dans laquelle l'élément d'extension (216, 217) est déplacé dans un espace extérieur en avant de la base de support (218), et entre une position de rangement (NU), dans laquelle l'élément d'extension (216, 217) est déplacé dans un espace de repos en direction de la base de support (218), **caractérisé en ce que** l'ensemble d'articulation (220) est configuré sous la forme d'un ensemble à articulations multiples si bien que l'élément d'extension (216, 217) est logé de manière mobile par pivotement autour de plusieurs axes de d'articulation ou autour d'un axe d'articulation non fixe.

2. Support de charges selon la revendication 1 ou selon le préambule de la revendication 1, **caractérisé en ce que** l'ensemble d'articulation (215, 220) comprend au moins un palier d'articulation (22), dans le cadre duquel un premier élément de palier (243) et un deuxième élément de palier (244) sont logés l'un contre l'autre de manière à pouvoir pivoter autour d'un axe de pivotement (242) et pivotent autour d'une cavité de palier (241) s'étendant le long de l'axe d'articulation (242) et servant à recevoir un conduit (240) électrique aux fins de l'alimentation électrique de l'élément d'extension (216,217).

3. Support de charges selon la revendication 2, **caractérisé en ce que** la cavité de palier (241) est délimitée en particulier de manière directe par au moins une partie d'articulation faisant saillie du premier élément de palier (243) et/ou du deuxième élément de palier (244).

4. Support de charges selon l'une quelconque des revendications précédentes, **caractérisé en ce que** l'ensemble d'articulation (215, 220) comprend au moins un bras de support (221, 252) servant à supporter l'élément d'extension (216, 217).

5. Support de charges selon la revendication 4, **caractérisé en ce que** le bras de support (221, 252) dit au moins un est configuré sous la forme d'un bras, qui saisit, dans la position d'utilisation (U) un élément (89) disposé entre l'espace de repos et l'espace extérieur de telle manière que l'élément d'extension (216, 217) est disposé dans l'espace extérieur en amont de l'élément.

6. Support de charges selon la revendication 4 ou 5, **caractérisé en ce que** le dit au moins un bras de support (221, 252) est disposé, dans la position de rangement (NU), au moins essentiellement dans la zone de repos, et/ou **en ce que** le dit au moins un bras de support (221, 252) et l'élément d'extension (216, 217) s'étendent à peu près de manière parallèle et/ou reposent l'un contre l'autre dans la position de rangement (NU).

7. Support de charges selon l'une quelconque des revendications 4 à 6, **caractérisé en ce que** l'ensemble d'articulation (215, 220) comprend un bras directeur (229), qui guide le mouvement dudit au moins un bras de support (221, 252) au moins au nombre de un entre la position de rangement (NU) et la position d'utilisation (U) et/ou qui définit au moins une position finale du mouvement.

8. Support de charges selon l'une quelconque des revendications 4 à 7, **caractérisé en ce que** ledit au moins un bras de support (221, 252) et le bras directeur (229) sont couplés l'un à l'autre au moyen d'un guidage par pivotement et/ou par coulissement.

9. Support de charges selon l'une quelconque des revendications 4 à 8, **caractérisé en ce que** le bras directeur (229) et ledit au moins un bras de support (221, 252) sont supportés de manière à pouvoir pivoter au moyen de paliers de pivotement au niveau d'un corps de base (211) du support fonctionnel (210) et/ou forment des composants d'un quadrilatère articulé, et/ou en ce que le bras directeur (229) soutient ledit au moins un bras de support (221, 252) dans la position d'utilisation (U) et/ou dans la position de rangement (NU).

10. Support de charges selon l'une quelconque des revendications précédentes, **caractérisé en ce qu'**il présente un ensemble d'encliquetage servant à enclencher l'élément d'extension (216, 217) dans la position de rangement (NU) et/ou dans la position d'utilisation (U).

11. Support de charges selon la revendication 10, **caractérisé en ce que** l'ensemble d'encliquetage comprend au moins un ergot d'encliquetage (237, 238) disposé dans ou au niveau d'une articulation et/ou dans ou au niveau d'un guidage de l'ensemble d'articulation (215, 220).

12. Support de charges selon la revendication 11, **caractérisé en ce que** ledit au moins un ergot d'encliquetage (237, 238) est prévu pour venir en prise avec un logement d'encliquetage (239) disposé de manière excentrique par rapport à un axe de pivotement (226) d'une articulation de pivotement (225), et/ou **en ce que** ledit au moins un ergot d'encliquetage (237, 238) de un est disposé au niveau d'un guide par pivotement et/ou par coulissement (231) ou dans ce dernier afin d'enclencher un élément de guidage (232) guidé dans le guidage par pivotement et/ou par coulissement (231).

13. Support de charges selon l'une quelconque des revendications précédentes, **caractérisé en ce que** l'élément d'extension (216, 217) comprend un témoin lumineux (21) et/ou un support d'immatriculation (13), et/ou **en ce que** le support fonctionnel (210) comprend une poignée servant à actionner un verrouillage du support de charges et/ou au moins une attache (214) pour une partie de pare-chocs (89).

14. Support de charges selon l'une quelconque des revendications précédentes, **caractérisé en ce que** la base de support (218) présente des profilés de support (161) s'étendant à peu près en direction d'un axe longitudinal (26), lesquels profilés de support sont reliés entre eux en direction d'un axe transversal (Y) s'étendant de manière transversale par rapport à l'axe longitudinal (26) par un support transversal (162) et/ou par le support fonctionnel (210).

15. Support de charges selon l'une quelconque des revendications précédentes, **caractérisé en ce que** la base de support (218) fait partie intégrante d'un chariot (12), sachant que le chariot (12) fait davantage saillie à l'avant d'une base de guidage de chariot dans une position d'utilisation que dans une position de repos, et/ ou sachant que ledit chariot présente un système de fixation destiné à être fixé de manière amovible au niveau du véhicule (80), en particulier au niveau d'un attelage de remorque du véhicule (80).
